# EUROPEAN PATENT APPLICATION

(11) **EP 1 542 007 A1**
(43) Date of publication of application: **15.06.2005**
(21) Application number: 03792842.1
(22) Date of filing: 26.08.2003
(51) Int. Cl.: G01N 33/48, G01N 15/14

(54) **CELL ANALYZING AND SEGREGATING DEVICE**

(30) Priority: 26.08.2002 JP 2002245902
(71) Applicant: Japan Science and Technology Agency, Kawaguchi-shi, Saitama 332-0012 (JP)
(72) Inventor: ICHIKI, Takanori, Tsurugashima-shi, Saitama 350-2203 (JP); YASUDA, Kenji, Koto-ku, Tokyo 135-0052 (JP)
(74) Representative: Calamita, Roberto
(86) International application number: PCT/JP2003/010760
(87) International publication number: WO 2004/019033

(57) **Abstract**

A cell analysis and sorting apparatus, comprising a channel into which a fluid containing samples is introduced, the samples being introduced by a laminar flow into a sample-separating portion; a pair of fluid passages arranged symmetrically on both sides of the channel, a pair of streams of fluid that are made to meet in the sample-separating portion being introduced into the fluid passages; means for introducing an external force to the sample-separating portion only when an observed sample is discharged out of the sample-separating portion; a sample recovery channel disposed downstream of the channel into which the samples are introduced such that the fluid containing a sample selected from the sample-selecting portion flows out in a laminar flow; and a pair of fluid passages which are arranged symmetrically on both sides of the sample recovery channel and into which unwanted samples are discharged, whereby the collected samples can be prevented from being damaged by sorting the samples based on the micro structure of the samples and a fluorescence distribution in the samples.

## Description

### Technical Field

The invention of this application relates to a novel cell analysis and sorting apparatus permitting easy analysis and sorting of cell samples without damage to the cells.

### Background Art

Separating and recovering certain cells in a culture solution is an important technique in biological and medical analyses. Where cells are sorted by differences in specific gravity, the sorting can be carried out by sedimentometry. However, in a case where cells do not have sufficient differences to discriminate non-sensitized cells from sensitized cells, it is necessary to sort cells one by one based on information obtained either by staining with a fluorescent antibody or by visual observation. For example, a cell sorter is available as this technique. The cell sorter is the following technique. Each individual, fluorescently stained cell is isolated into a liquid drop to which an electric charge is imparted. Based on the presence or absence of fluorescence from the cell in the liquid drop or based on the amount of scattering light, a high electric field is applied in an arbitrary direction perpendicularly to the direction of dropping while the drop is falling to thereby control the direction of dropping of the liquid drop. In this way, the cells are separately recovered in a plurality of containers placed underneath. This technique is reported in detail by Kamarck, M.E., in Methods Enzymol., Vol. 151, pp. 150-165, (1987).

However, this technique has some problems. It is expensive. The equipment is large in size. A high electric field of thousands of volts is required. A large amount of sample is necessitated. At the stage when liquid drops are created, there is a possibility that the cells are damaged. It is impossible to directly observe the samples. Therefore, in recent years, a cell sorter has been invented in which fine particles flowing through a laminar flow formed in a microscopic channel fabricated using microlithography are sorted while being directly observed with a microscope. This is reported, for example, in Micro Total Analysis, '98, pp. 77-80 (Kluwer Academic Publishers, 1998) or in Analytical Chemistry, 70, pp. 1909-1915 (1998). However, the response speed of the sample sorting is low relative to the observational means. To commercialize this technique, a method of processing samples at a high response speed without damage to them is required. Also, the inventor of this application and others have made attempts to solve the problems with the prior art.

The attempt by the inventor and others is to perform sorting by fluorescent observation. This technique has features and is more beneficial than the prior art method. Nonetheless, the actual situation is that none of optical measuring means, means for introducing samples, separation method, and so on have been yet discussed in detail. Therefore, if only fluorescent observation is performed, it is possible to discern samples emitting fluorescent light. However, passage of samples emitting no fluorescent light cannot be recognized. Where only fluorescence-labeled samples are recovered, there is a possibility that samples emitting no fluorescent light are erroneously recovered.

Accordingly, it is an object of the invention of this application is to provide a novel cell analysis and sorting apparatus which solves the prior problems described so far, sorts samples based on microstructures of the samples and on the fluorescent distribution within each sample, and can sort and analyze cell samples easily without damage to recovered samples.

### Disclosure of Invention

A first aspect of the invention of this application which solves the foregoing problems provides a cell analysis and sorting apparatus comprising: a channel into which a fluid containing samples is introduced, the samples being introduced into a sample-separating portion by a laminar flow; a pair of fluid passages arranged symmetrically on both sides of the channel, a pair of streams of fluid made to meet in the sample-separating portion being introduced into the fluid passages; means for introducing an external force to the sample-separating portion only when an observed sample is discharged out of the sample-separating portion; a sample recovery channel disposed downstream of the channel into which the samples are introduced such that the fluid containing a sample selected from the sample-separating portion flows out in a laminar flow; and a pair of fluid channels which are arranged symmetrically on both sides of the sample recovery channel and into which unwanted samples are discharged. Consequently, the recovered cell samples are prevented from being damaged.

A second aspect of the invention of this application has means capable of making at least one stereoscopic microscope image and one fluorescent microscope image correspond to each other at the same time by referring to their mutual positional relationship when samples within an apparatus are observed with an optical microscope in order to sort the samples based on microstructures of the samples and on fluorescent distribution in each sample. A third aspect provides means for producing a flow of low fluid velocity within the apparatus without producing pulsed flow and without using a pump or similar means. For this purpose, there is provided means making use of a flow produced by gravity according to differences in height between liquid drops introduced into the apparatus.

### Brief Description of Drawings

Fig. 1 is a schematic view showing one example of a system configuration of a cell analysis and sorting apparatus of this invention;
Fig. 2 is a schematic diagram showing one example of the configuration of optics of a cell analysis and sorting apparatus of this invention;
Fig. 3 is a schematic view showing one example of the configuration of the sample-sorting portion of a cell analysis and sorting apparatus of this invention;
Fig. 4 is a schematic view showing one example of the configuration of the sample-sorting portion of a cell analysis and sorting apparatus of this invention;
Fig. 5 is a cross-sectional view of an example of a cell analysis and sorting chip of this invention;
Fig. 6 is a diagram illustrating a procedure for analyzing and sorting cells in accordance with this invention; and
Fig. 7 shows microscope images of one example of a method of sorting cells by the use of a cell analysis and sorting apparatus of this invention.

The symbols used in the figures are as follows.
- 100:: cell analysis and sorting chip;
- 101, 108:: light sources;
- 102, 109, 112, 114, 231, 232, 233:: bandpass filters;
- 103:: condenser lens;
- 104:: stage;
- 105, 504:: objective lenses;
- 106, 110, 211, 212, 262, 263:: dichroic mirrors;
- 111, 213, 261:: mirrors;
- 113, 115, 272:: cameras;
- 116:: image processing and analysis portion;
- 117:: driver device;
- 200, 201, 202, 203, 506:: directions of travel of light;
- 221, 222, 223:: slits;
- 241, 242, 243:: optical attenuation filters;
- 251, 252, 253:: shutters;
- 271:: lens;
- 301, 302, 303, 304, 305, 306, 401, 402, 403, 404, 405, 406:: channels or fluid passages;
- 311, 411:: samples;
- 321, 322:: ultrasonic sources;
- 421, 422, 423, 424:: electrodes;
- 501, 503:: chip cross sections;
- 502:: liquid layer;
- 505:: flow of fluid;
- 507:: seal;
- 508:: needle;
- 509:: ends of opening of chip;
- 510:: sample liquid;

### Best Mode for Carrying Out the Invention

The invention of this application has the features described above. Embodiment thereof are hereinafter described.

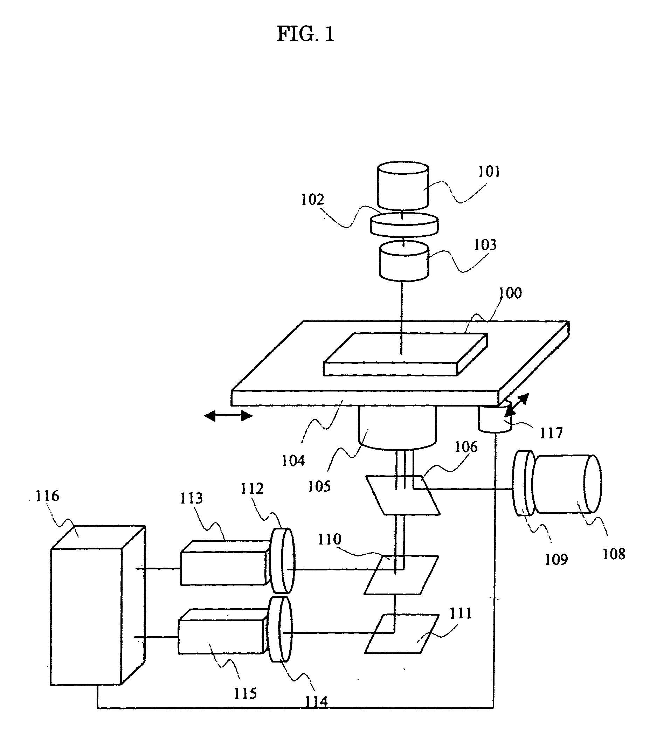

One example of the system configuration of a cell analysis and sorting apparatus of the invention of this application is schematically shown in Fig. 1. Indicated by 101 is a light source for a stereoscopic microscope. Generally, a halogen-based lamp is used as the light source. A bandpass filter 102 transmits only certain wavelengths of the light emitted from the light source for observations using the stereoscopic microscope such as a phase difference microscope. A condenser lens 103 introduces phase difference rings in a case where phase difference observation is made. The lens introduces a polarizer in a case where differential interference observation is made. Placed on a stage 104 is a cell analysis and sorting chip 100. An optimum position of the chip is observed by moving the stage by means of a driver device 117. The state inside the channel in the chip is observed with an objective lens 105. What are observed from the objective lens at this time are: (1) a stereoscopic image of each sample within the channel owing to transmitted light coming from the light source 101 and (2) a fluorescent image emitted from the sample in response to exciting light. Light from another light source 108 is passed through a bandpass filter 109 such that only the wavelength of the exciting light is directed to a dichroic mirror 106 and then to the objective lens. Thus, the exciting light is emitted from the objective lens. The wavelength of the light used for observation of the stereoscopic microscope image at this time is sufficiently shorter or sufficiently longer than the observed range of fluorescent wavelengths. Preferably, the wavelength is made different from the wavelength region of the exciting light, if possible. Only the stereoscopic microscope image of inside the channel is observed through a camera 113 via a dichroic mirror 110 and a bandpass filter 112. The dichroic mirror 110 reflects the same wavelength of light as the wavelength of light transmitted through the bandpass filter 102. On the other hand, the fluorescent image is observed through a camera 115 by selectively transmitting only the wavelength range of fluorescent observation of the light transmitted through the objective lens by means of a mirror 111 and a bandpass filter 114. The images taken by the two cameras 113 and 115 are analyzed by an image processing portion 116. The microstructure of the sample can be identified by comparing the relative positional relationship between the two images. Also, the positions at which fluorescences are emitted can be compared and identified. In this embodiment, comparison and analysis are performed by observing a stereoscopic image in one wavelength range and a fluorescent image in one wavelength range. Similarly, stereoscopic images in two or more wavelength ranges may be compared. Two or more fluorescent images may be compared and analyzed. For these purposes, one or more additional dichroic mirrors, additional light sources, or additional camera observation systems may be arranged in the optical paths in the same way as in the above embodiment.

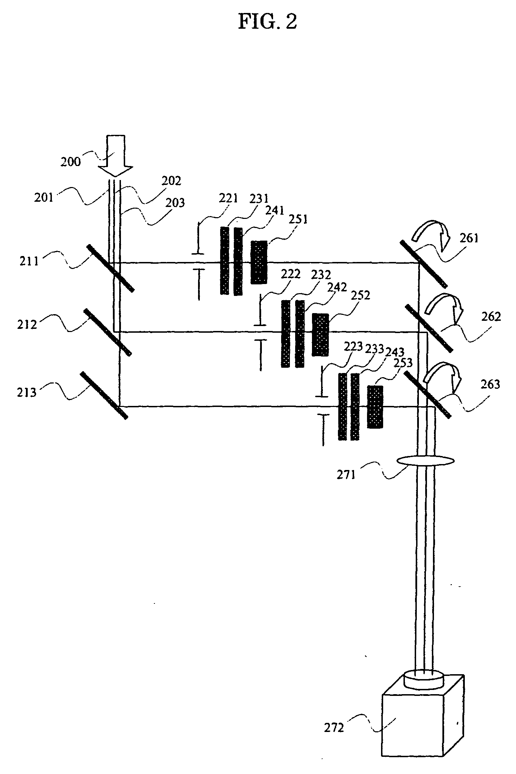

Fig. 2 is a schematic diagram showing one example of the configuration of the optics of a cell analysis and sorting apparatus of the invention of this application, the apparatus being used to measure images of plural different wavelengths at the same time using the photosensitive surface of an additional observation camera. Different wavelengths of light 201, 202, and 203 sent in from the objective lens are contained in light 200. Plural dichroic mirrors 211, 212 and a mirror 213 are disposed in the direction of travel of the light 200. With respect to the light split by these wavelengths, fields of view to be observed are selected by slits 221, 222, and 223 disposed in focal planes in the positions of the same optical path length. The strengths of the wavelengths of light are made substantially equal by bandpass filters 231, 232, and 233 and optical attenuation filters 241, 242, and 243. Also, the certain wavelengths of light to be observed are adjusted. Where certain wavelengths of light should be blocked off by shutters 251, 252, and 253, the blocking can be done. Light transmitted through the shutters again pass through the mirror 261 and the dichroic mirrors 262 and 263. Then, the light is focused onto the photosensitive surface of a camera 272 by a lens 271. Since the mirrors 261, 262, and 263 are movable, the light can be focused arbitrarily onto any desired area on the photosensitive surface of the camera. In the embodiment described so far, a technique for analyzing light consisting of three different wavelengths has been described. Similarly, light consisting of four or more different wavelengths can also be used. In this embodiment, the photosensitive surface of only one camera is used. Consequently, it is not necessary to prepare plural expensive, high-sensitivity cameras. In addition, where it is difficult to synchronize plural cameras such as high-speed cameras, images of plural different wavelengths such as stereoscopic microscope images or fluorescent microscope images can be analyzed at the same time simply by analyzing data obtained by one photosensitive surface.

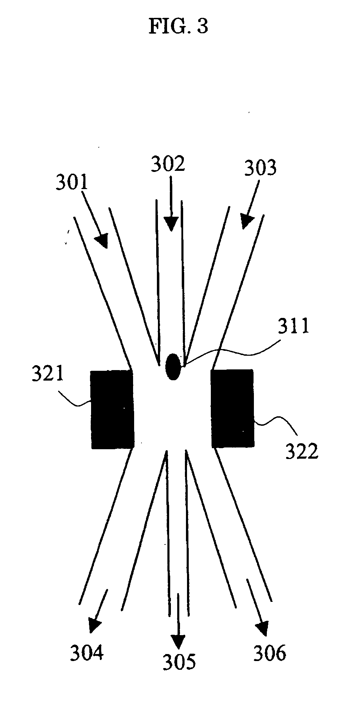

Fig. 3 is a schematic diagram showing one example of the configuration of the sample-sorting portion of a cell analysis and sorting apparatus of this invention. A fluid containing a sample flows into a sample-separating portion through a channel 302. A fluid containing no sample flows into the sample-separating portion through other channels 301 and 303. Ultrasonic sources 321 and 322 are used to exert an external force on a sample 311 ultrasonically within the sample-separating portion by applying ultrasonic waves to the sample-separating portion where the three channels meet. Streams of fluid introduced from the channels 301, 302, and 303 are so adjusted that the fluid has no pulsation and that their fluid velocities are made coincident. Therefore, the laminar flow is maintained in the sample-separating portion. The sample 311 introduced into the sample-separating portion from the channel 302 travels to the channel 305 unless the sample undergoes an external force. Conversely, where an external force owing to the ultrasonic waves acts, the sample is discarded into the channel 304 or channel 305. At this time, the channel 302 for introducing the sample and the channel 305 for recovering the sample are aligned on a line along the direction of flow. The channels 301 and 303 for introducing only a pair of streams of fluid into the sample-separating portion are arranged symmetrically with respect to the axis of the aligned channels. Similarly, the pair of channels 304 and 306 for discarding unwanted samples are arranged axisymmetrically with respect to the channel 305. At least the channels 301 and 303 show the same cross-sectional area with respect to the flow. Also, the channels 304 and 306 show the same cross-sectional area with respect to the flow.

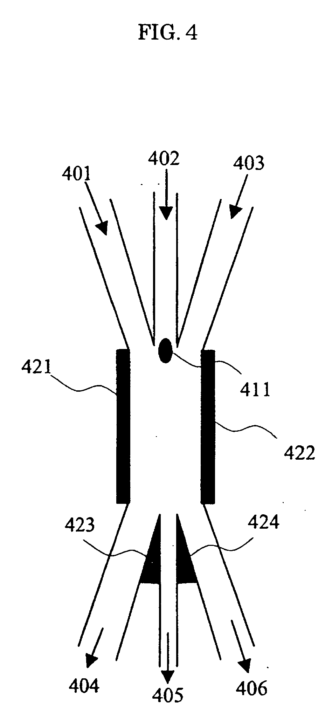

Fig. 4 is a schematic diagram showing one example of the configuration of the sample-sorting portion similarly to Fig. 3. An example of a technique of directing an external force to the sample electrostatically instead of ultrasonically is shown. A fluid containing a sample 411 and introduced from a channel 402 is similarly introduced into the sample-separating portion, and a decision is made based on the result of a measurement using an optical measuring technique as to whether the sample is to be recovered or discarded. Where it is recovered, no external force is applied. The sample is made to travel intact into the channel 405 and recovered. Where the sample is discarded, an electric field is applied to electrodes 421 and 422 to direct the sample to the channel 404 or 406. At this time, electrodes 423 and 424 are grounded such that they act as reference electrodes. Generally, a substance within an aqueous solution has a zeta potential at the boundary surface with the aqueous solution. The substance has an electric charge arising from this potential. Accordingly, an external force can be applied to the discarded sample by causing the electric field to act on the sample. Especially, in this case, samples having positive charge and samples having negative charge can be separated into the channels 404 and 406. Furthermore, where the introduced sample contains air bubbles, the bubbles have no surface charge. Therefore, the air bubbles are not affected by the electric field. Optically speaking, however, it is often difficult to discriminate air bubbles from liposomes and the like. However, it is possible to discriminate between air bubbles and sample particulates using this technique.

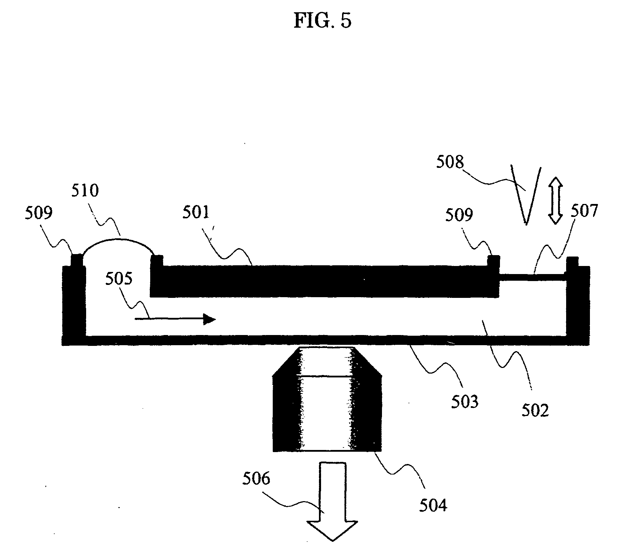

Fig. 5 is a cross-sectional view of an example of the cell analysis and sorting chip of the invention of this application. Chip cross sections 501 and 503 have sufficient transparency to the observed wavelength of light. The thickness of the top surface 501 may be of the millimeter order to maintain the structure. With respect to the chip cross section 503 which makes contact with an objective lens 504 to observe flow 505 of fluid within a liquid layer 502, the maximum thickness is limited according to the magnification of the objective lens. For example, where an objective lens having a numerical aperture of 1.35 and a magnification of 100 times is used as the objective lens 504, the thickness of the cross section is preferably set to less than 0.2 mm. Water repellency has been imparted to the sample liquid introduction portion and to the ends 509 of the chip opening of the recover portion. Processing has been done to prevent the liquid in the opening portion from diffusing. A sample liquid 510 is placed on the sample introduction portion. A seal 507 is broken by sticking a needle 508 into it. Thus, the sample liquid begins to flow at a flow velocity corresponding to the height of the liquid surface of the sample liquid 510. At this time, a flow having a strictly controlled flow velocity and having no pulsation can be created by strictly controlling the amount of the sample liquid. In this technique, a device such as a pump is not required.

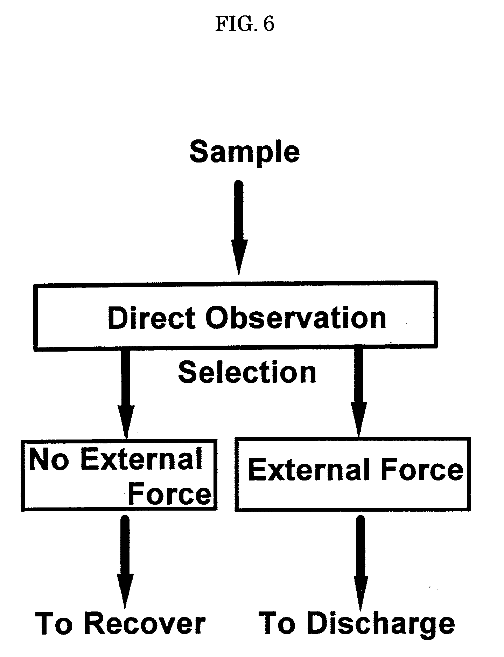

Fig. 6 is a diagram illustrating a procedure for analyzing and sorting cells in accordance with the invention of this application. As described previously in the above embodiment, each sample introduced into a channel is observed with a microscope and a decision is made as to whether the sample is to be recovered or discarded. With respect to each recovered sample, it is made to travel directly to the recovery channel without applying any external force at all, and then the sample is recovered. At this time, the sample travels through a laminar flow. It is considered that the sample that is least damaged is recovered because no external force is applied at all. Where the sample is discarded, no problems will take place if the cell is damaged. Therefore, the sample is discharged by causing an arbitrary external force to act on the sample.

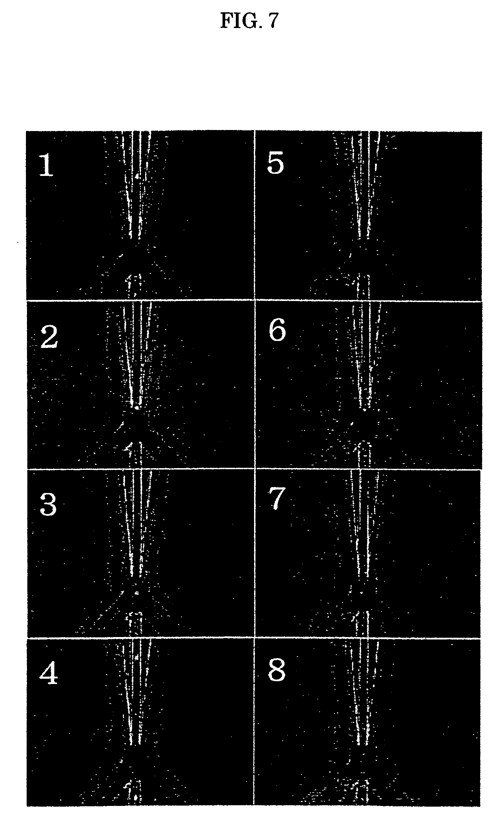

Fig. 7 shows microscope photographs of examples of samples having actually different fluorescences, the examples being obtained by image-processing and sorting the samples by a cell analysis and sorting apparatus of the invention of this application. With respect to the size of each channel, the cross section of each channel was 20 mµ (wide) × 20 µm (high or deep). The ratio of their flow rates was 1:1:1. The kind of the cells was equine red blood cell. A physiological salt solution (0.9% NaCl: pH 7.4) was used as a fluid. An electric field (induced electrophoretic force) was used as an external force. Photographs 1 to 4 show a process in which cells having a size of 3 micrometers and emitting red fluorescent light are recovered. Similarly, photographs 5 to 8 show a process in which cells having a size of 3 micrometers and emitting green fluorescent light are discarded.

### Industrial Applicability

As described in detail so far, the invention of this application permits minute samples to be identified, sorted, and recovered without damaging them.

## Claims

1. A cell analysis and sorting apparatus comprising:
a channel into which a fluid containing samples is introduced, the samples being introduced by a laminar flow into a sample-separating portion;
a pair of fluid passages arranged symmetrically on both sides of the channel, a pair of streams of fluid that are made to meet in the sample-separating portion being introduced into the fluid passages;
means for introducing an external force to the sample-separating portion only when an observed sample is discharged out of the sample-separating portion;
a sample recovery channel disposed downstream of the channel into which the samples are introduced such that the fluid containing a sample selected from the sample-selecting portion flows out in a laminar flow; and
a pair of fluid passages which are arranged symmetrically on both sides of the sample recovery channel and into which unwanted samples are discharged.

2. The cell analysis and sorting apparatus of claim 1, wherein there is provided means capable of making at least one stereoscopic microscope image and one fluorescent microscope image correspond to each other at the same time by referring to their mutual positional relationship when the sample is observed with an optical microscope.

3. The cell analysis and sorting apparatus of claim 1, wherein there is provided means making use of a flow produced by gravity according to differences in height between introduced liquid drops to impart a flow velocity to the fluid.
